(19) Europäisches Patentamt
European Patent Office
Office européen des brevets

(11) **EP 4 474 173 B1**

(12) **EUROPÄISCHE PATENTSCHRIFT**

(45) Veröffentlichungstag und Bekanntmachung des Hinweises auf die Patenterteilung:
**25.02.2026 Patentblatt 2026/09**

(21) Anmeldenummer: **24176580.9**

(22) Anmeldetag: **17.05.2024**

(51) Internationale Patentklassifikation (IPC):
**B60C 11/12** *(2006.01)*

(52) Gemeinsame Patentklassifikation (CPC):
**B60C 11/1218;** B60C 2011/1213

(54) **FAHRZEUGLUFTREIFEN**

PNEUMATIC TYRE FOR VEHICLES

BANDAGE PNEUMATIQUE POUR VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **07.06.2023 DE 102023205317**

(43) Veröffentlichungstag der Anmeldung:
**11.12.2024 Patentblatt 2024/50**

(73) Patentinhaber: **Continental Reifen Deutschland GmbH**
**30175 Hannover (DE)**

(72) Erfinder:
• **Faturikova, Dagmar**
**020 01 Púchov (SK)**
• **Schlittenhard, Jan**
**30175 Hannover (DE)**
• **Vojtus, Michal**
**020 01 Púchov (SK)**

(74) Vertreter: **Continental Corporation**
**c/o Continental Reifen Deutschland GmbH**
**Intellectual Property Tires**
**Continental-Plaza 1**
**30175 Hannover (DE)**

(56) Entgegenhaltungen:
EP-A1- 2 133 217      WO-A1-2019/035847
JP-A- 2000 177 329      US-A- 4 794 965

## Beschreibung

Die Erfindung betrifft einen Fahrzeugluftreifen mit einem Laufstreifen mit von Rillen begrenzten Profilpositiven mit in Draufsicht zur axialen Richtung unter einem Winkel von 0° bis zu 50° verlaufenden Einschnitten mit jeweils einem Einschnittgrund und einer Breite von 0,4 mm bis 2,0 mm, wobei jeder Einschnitt zumindest in einem in Draufsicht vorliegenden Einschnittteil auf eine maximale Tiefe von 70% bis 100% der Profiltiefe reicht und in diesem Einschnittteil, im Querschnitt betrachtet, einen in radialer Richtung verlaufenden, gewellten Abschnitt mit einer in Richtung Einschnittgrund abnehmenden Amplitude, welche relativ zu einer in Ausbreitungsrichtung der Welle ausgerichteten Bezugslinie ermittelt ist, aufweist, wobei der gewellte Abschnitt oder ein Teil des gewellten Abschnitts aus die Bezugslinie genau einmal passierenden, zwischen den maximal ausgelenkten Stellen des gewellten Abschnitts verlaufenden Segmenten zusammengesetzt ist, wobei jedes Segment ein bezüglich der radialen Richtung geneigtes, erstes Segment oder ein bezüglich der radialen Richtung gegensinnig zum ersten Segment geneigtes, zweites Segment ist und wobei bei jedem ersten Segment der Amplitudenwert am radial äußeren Ende größer ist als der Amplitudenwert am radial inneren Ende, wobei der gewellte Abschnitt bzw. der Teil des gewellten Abschnitts aus zumindest, vorzugsweise genau, zwei ersten und zwei zweiten Segmenten zusammengesetzt ist.

Ein derartiger Fahrzeugluftreifen ist beispielsweise aus der WO 2019/035847 A1 bekannt. Dieser Fahrzugluftreifen weist einen Laufstreifen mit Profilpositiven mit Einschnitten auf, welche, im Querschnitt betrachtet, einen in radialer Richtung gewellten, mittleren Abschnitt aufweisen. Der mittlere Abschnitt setzt sich aus aneinander anschließenden Segmenten zusammen, welche jeweils über eine halbe Wellenlänge verlaufen. Die Wellenlänge und die Amplitude nehmen jeweils stufenweise von einer gegenseitigen Anschlussstelle der Segmente zur in Richtung Einschnittgrund jeweils nächsten gegenseitigen Anschlussstelle der Segmente ab. Durch diese Maßnahmen sollen die Einschnitte bei der Entnahme des Reifens aus der Vulkanisationsform in tadellosem Zustand erhalten bleiben.

Aus der US 4 794 965 A ist ein Fahrzeugluftreifen mit einem Laufstreifen mit durch Umfangsrillen und Querrillen voneinander getrennten Profilblöcken bekannt, welche jeweils mit einer geraden Anzahl von in Draufsicht parallel zu den Querrillen sowie zur axialen Richtung unter einem Winkel von höchstens 30° verlaufenden Einschnitten mit einer Breite von 0,1 mm bis 2,0 mm versehen sind. Die Einschnitte verlaufen, im Querschnitt betrachtet, gewellt und setzen sich aus aneinander anschließenden, zwischen den maximal ausgelenkten Stellen sowie zur radialen Richtung jeweils unter einem Winkel von bis zu 40° verlaufenden Segmenten zusammen. Die Orientierung der Einschnitte innerhalb eines Profilblocks ist derart, dass einander unmittelbar benachbarte Einschnitte, im Querschnitt betrachtet, bezüglicher einer in radialer Richtung verlaufenden Linie spiegelsymmetrisch ausgeführt sind, sodass die Wellenberge solcher Einschnitte und die Wellentäler solcher Einschnitte einander zugewandt sind. Die Amplitude der Welle nimmt stufenweise über die gegenseitigen Anschlussstellen der Segmente in Richtung Einschnittgrund ab. Ein solcher Reifen soll unter Aufrechterhaltung der üblichen Wirkungsweise der Einschnitte ein gleichmäßiges Abriebbild zeigen.

Die JP 2000 177 329 A offenbart einen Fahrzeugluftreifen mit einem Laufstreifen mit Profilblöcken mit Einschnitten, welche, im Querschnitt betrachtet, in Form einer Dreieckswelle, also zickzack-förmig, oder in Form einer Trapezwelle verlaufen und sich jeweils aus aneinander anschließenden, zwischen den maximal ausgelenkten Stellen verlaufenden Segmenten zusammensetzen. Die Amplitude der Welle nimmt stufenweise über die gegenseitigen Anschlussstellen der Segmente in Richtung Einschnittgrund ab. Solche Einschnitte sollen die mit fortschreitendem Laufstreifenabrieb einhergehende Zunahme der Blocksteifigkeit auf eine für die Griffeigenschaften günstigen Weise ausgleichen.

Bei Fahrzeugluftreifen der eingangs genannten Art treten beim Abrollen des Reifens im Bereich der jeweils im Footprint befindlichen Einschnitte durch den in radialer Richtung wellenförmig verlaufenden Abschnitt vorteilhafte Abstützungseffekte auf. Diese sorgen für eine gegenseitige Versteifung der durch die Einschnitte gebildeten Profilpositivsegmente und verstärken die für Traktionsund Griffeigenschaften vorteilhaften Effekte der Einschnitte. Die gegenseitigen Abstützungseffekte sind von der jeweiligen Restprofiltiefe des Reifens und der jeweils vom Fahrzeug auf die Reifen wirkenden Last abhängig und sind insbesondere bei deutlich beladenen Fahrzeugen beeinträchtigt.

Der Erfindung liegt daher die Aufgabe zu Grund, bei einem Fahrzeugluftreifen der eingangs genannten Art die für die Traktions- und Griffeigenschaften günstigen Abstützungseffekte der Einschnitte möglichst unabhängig von der Restprofiltiefe und der auf den Reifen wirkenden Last aufrecht zu erhalten.

Gelöst wird die gestellte Aufgabe erfindungsgemäß dadurch, dass bei jedem zweiten Segment der Amplitudenwert am radial äußeren Ende mit dem Amplitudenwert am radial inneren Ende übereinstimmt und wobei die übereinstimmenden Amplitudenwerte stufenweise in Richtung Einschnittgrund von einem zweiten Segment zum nächsten zweiten Segment abnehmen.

Die erfindungsgemäß ausgeführten Einschnitte zeigen mit zunehmendem Laufstreifenabrieb ein sich speziell veränderndes Verschränkungsverhalten unter Belastung des Laufstreifens. Die speziell über die Segmente konstante bzw. sich verändernde Amplitude sorgt dafür, dass die Verschränkungseffekte unabhängig von der Restprofiltiefe und der auf den Reifen wirkenden Last für eine optimale Steifigkeit der Profilelemente sorgen, wobei die bei fortschreitendem Laufstreifenabrieb überproportionale Zunahme der Steifigkeit der Profilelemente auf eine für die Traktions- und Griffeigenschaften günstigere Weise als bisher kompensiert wird.

Gemäß einer bevorzugten Ausführung ist ein erstes Segment das radial äußerste Segment und ein zweites Segment das radial innerste Segment. Dies verbessert die Verschränkungseffekte, insbesondere wegen der erwähnten, bei fortschreitendem Laufstreifenabrieb überproportionalen Zunahme der Stetigkeit.

Eine weitere bevorzugte Ausführung sieht vor, dass der gewellte Abschnitt bzw. der Teil des gewellten Abschnitts genau zwei erste und zwei zweite Segmente aufweist, sodass der größte Amplitudenwert am radial äußeren Ende des radial äußersten, ersten Segments vorliegt, wobei Folgendes gilt:

$$A_1 = A_2 + (A_2 - A_3),$$

wobei

$A_1$ der größte Amplitudenwert,
$A_2$ der mittlere Amplitudenwert und
$A_3$ der kleinste Amplitudenwert

ist.

Eine sich derart stufenweise ändernde Amplitude sorgt für eine besonders günstige Kompensation der mit dem Laufstreifenabrieb zunehmenden Steifigkeit der Profilelemente und verbessert daher die Traktions- und Griffeigenschaften zusätzlich.

Eine weitere bevorzugte Ausführung ist dadurch gekennzeichnet, der bzw. die kleinste(n) Amplitudenwert(e) 80% bis 120%, insbesondere 90% bis 100%, der Breite des Einschnitts beträgt bzw. betragen. Dies ist für die erwähnten Abstützung- und Verschränkungseffekte von Vorteil, insbesondere bei entsprechend fortgeschrittenem Laufstreifenabrieb.

Bei der letztgenannten Ausführung ist es vorteilhaft, wenn die zweitkleinsten Amplitudenwerte 150% bis 250%, insbesondere 170% bis 230%, bevorzugt 190% bis 210%, des kleinsten Amplitudenwerts bzw. der kleinsten Amplitudenwerte beträgt bzw. betragen.

Es ist ferner vorteilhaft, wenn der gewellte Abschnitt in radialer Richtung eine Länge von 50% bis 70%, insbesondere von 55% bis 65%, der maximalen Tiefe des Einschnitts aufweist.

Eine weitere bevorzugte Ausführung sieht vor, dass jedes Segment, im Querschnitt betrachtet, einen die Bezugslinie passierenden, gerade verlaufenden, mittleren Segmentteil aufweist, wobei die mittleren Segmentteile durch kreisbogenförmig verlaufende, an die mittleren Segmentteile tangential anschließende Segmentübergänge verbunden sind. Die gerade verlaufenden mittleren Segmentteile tragen zu einer Verbesserung der gegenseitigen Abstützung der Einschnittwände unter Belastung unabhängig von der Restprofiltiefe und der auf den Reifen wirkenden Last bei. Die speziell ausgeführten Segmentübergänge sorgen für eine besonders hohe Rissbeständigkeit der Eischnittwände bzw. des den Einschnitt begrenzenden Gummimaterials.

Eine vorteilhafte Weiterentwicklung der zuletzt genannten bevorzugten Ausführung ist dadurch gekennzeichnet, dass die Segmentübergänge entlang von übereinstimmend großen Radien verlaufen.

Gemäß einer weiteren bevorzugten Ausführung schließt an das radial äußere Ende des gewellten Abschnitts ein zur Laufstreifenperipherie reichender, in radialer Richtung verlaufender, radial äußerer Abschnitt mit einer in radialer Richtung ermittelten Länge von 10% bis 20%, insbesondere von bis zu 17%, der maximalen Tiefe des Einschnitts an. Der radial äußere Abschnitt sorgt für ein gutes Ausformungsverhalten der Einschnitte bei der Entnahme des Reifens aus der Vulkanisationsform, sodass die Einschnitte auf besonders zuverlässige Weise von Beginn an gute Traktions- und Griffeigenschaften ermöglichen.

Ferner ist es vorteilhaft, wenn an das radial innere Ende des gewellten Abschnitts ein in radialer Richtung verlaufender, radial innerer Abschnitt anschließt, welcher insbesondere fluchtend mit dem gegebenenfalls vorgesehenen, radial äußeren Abschnitt verläuft. Der radial innere Abschnitt verbessert vor allem die Rissbeständigkeit am und nahe des Einschnittgrunds.

Für die erwähnten Abstützungseffekte ist es günstig, wenn der Einschnittteil, in welchem der Einschnitt den gewellten Abschnitt aufweist, in Draufsicht betrachtet, über zumindest 50%, insbesondere über zumindest 75%, der Länge des Einschnitts verläuft.

Für die erwähnten Abstützungseffekte ist es ferner günstig, wenn der Einschnitt über seine gesamte Erstreckung auf die maximale Tiefe reicht und über seine gesamte in Draufsicht vorliegende Erstreckung den gewellten Abschnitt aufweist.

Bevorzugter Weise setzt sich der Einschnitt, in Draufsicht betrachtet, aus einem in Wellenform verlaufenden Hauptabschnitt und zwei gerade oder gebogen sowie fluchtend miteinander verlaufenden Randabschnitten zusammen. Der Hauptabschnitt verbessert das Verschränkungsverhalten des Einschnitts vor allem unter Querbelastung. Die Randabschnitte gestatten bei in Rillen einmündenden Einschnitten die Aufrechterhaltung einer im Hinblick auf das Abriebverhalten des jeweiligen Profilpositivs günstigen Steifigkeit an den jeweiligen Randbereichen der an die Einschnitte angrenzenden Profilpositivsegmente.

Ferner ist es bevorzugt, wenn die Einschnitte die Profilpositive durchqueren.

Eine weitere bevorzugte Ausführung ist dadurch gekennzeichnet, dass der Teil des gewellten Abschnitts aus den Segmenten zusammengesetzt ist, wobei die beiden Enden des Teils gegenüber der Bezugslinie ausgelenkt sind und wobei die Welle des gewellten Abschnitts durch einen an das radial äußere Ende des Teils des gewellten Abschnitts abschließenden Übergangsteil und einen an das radial innere Ende des Teils des gewellten Abschnitts abschließenden Übergangsteil zur Bezugslinie zurückgeführt ist.

Weitere Merkmale, Vorteile und Einzelheiten der Erfindung werden nun anhand der Zeichnung, die schematisch ein Ausführungsbeispiel der Erfindung zeigt, näher erläutert. Dabei zeigen

Fig. 1 eine Draufsicht auf einen Profilblock eines Laufstreifens eines Fahrzeugluftreifens mit einer Ausführungsform der Erfindung,

Fig. 2 eine vergrößerte Draufsicht auf einen Abschnitt des Profilblocks aus Fig. 1 im Bereich eines Einschnitts,

Fig. 3 einen Schnitt gemäß der Linie **III-III** der Fig. 2,

Fig. 4 eine Visualisierung des Einschnitts (Abzugskörper des Einschnitts) und

Fig. 5 eine vergrößerte Darstellung der Fig. 3.

Gemäß der Erfindung ausgeführte Fahrzeugluftreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Reifen in Radialbauart für Felgen mit einem ganzzahligen Felgendurchmesser von 18 Zoll bis 23 Zoll.

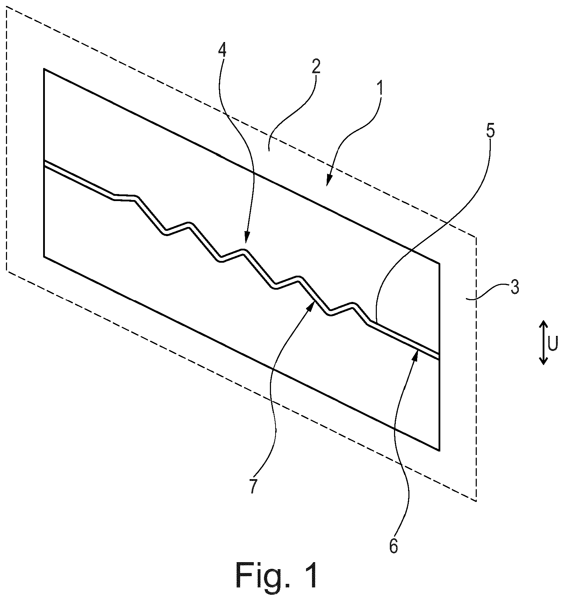

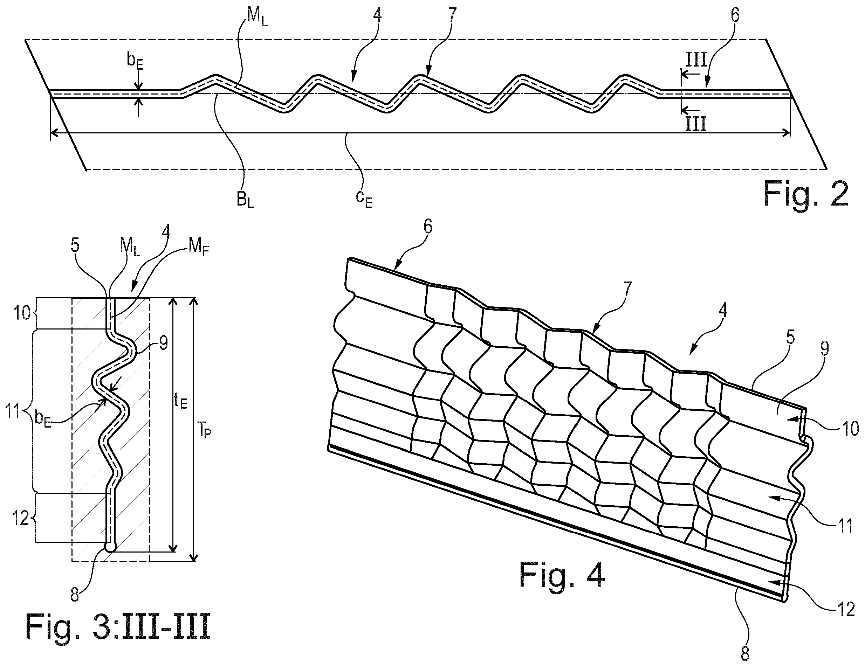

Fig. 1 zeigt eine Draufsicht auf einen in axialer Richtung langgestreckt parallelogrammförmigen, mittleren Profilblock 1 eines Laufstreifens eines Fahrzeugluftreifens. Die Umfangsrichtung des Fahrzeugluftreifens ist durch einen Doppelpfeil U angedeutet. Der mittlere Profilblock 1 ist in den beiden Umfangsrichtungen durch Querrillen 2 sowie seitlich durch Umfangsrillen 3 oder Rillenabschnitte von Umfangsrillen 3 begrenzt. Die Querrillen 2 trennen den mittleren Profilblock 1 von weiteren nicht gezeigten und jeweils insbesondere analog gestalteten, mittleren Profilblöcken, sodass der mittlere Profilblock 1 zu einer in Umfangsrichtung umlaufenden Profilblockreihe gehört. Beim Ausführungsbeispiel sind die Querrillen 2 und die Umfangsrillen 3 in radialer Richtung auf die jeweils vorgesehene Profiltiefe $T_P$ (angedeutet in Fig. 3) von üblicherweise 6,5 mm bis 13,0 mm, insbesondere von bis zu 10,0 mm, ausgeführt. Es können jedoch auch ausschließlich die Querrillen 2 oder ausschließlich die Umfangsrillen 3 auf die Profiltiefe $T_P$ ausgeführt sein. Die Querrillen 2 verlaufen, in Draufsicht betrachtet, gerade, parallel zueinander sowie zur axialen Richtung unter einem Winkel von 0° bis 50°, insbesondere von 5° bis 45°.

Im Profilblock 1 ist ein durchquerender Einschnitt 4 ausgebildet, welcher sich, in Draufsicht betrachtet, insgesamt gerade sowie parallel zu den Querrillen 2 erstreckt. Der Einschnitt 4 weist zwei Einschnittkanten 5 auf und setzt sich, in Draufsicht betrachtet, aus zwei gerade sowie miteinander fluchtend verlaufenden Randabschnitten 6 und einem in Wellenform verlaufenden Hauptabschnitt 7 zusammen.

Gemäß Fig. 3 und Fig. 4 ist der Einschnitt 4 durch einen beim Ausführungsbeispiel kanalförmigen Einschnittgrund 8 und zwei von den Einschnittkanten 5 ausgehenden Einschnittwänden 9 begrenzt. Wie Fig. 2 bis Fig. 4 zeigen, weist der Einschnitt 4 eine in Draufsicht dem Einschnittverlauf folgende Einschnittmittellinie $M_L$ (Fig. 2), eine von dieser ausgehende, zu den Einschnittwänden 9 übereinstimmend beabstandete Einschnittmittelfläche $M_F$ (Fig. 3) und eine in Draufsicht gerade sowie mittig durch die Randabschnitte 6 verlaufende Einschnittbasislinie $B_L$ (Fig. 2) auf, wobei der Einschnitt 4 bezogen auf die Einschnittbasislinie $B_L$ parallel zu den Querrillen 2 (Fig. 1) verläuft. Die Einschnittmittellinie $M_L$ und die Einschnittbasislinie $B_L$ fallen im Bereich der Randabschnitte 6 zusammen (Fig. 2).

Der Einschnitt 4 weist eine als kleinstmöglichen Abstand zwischen den Einschnittwänden 9 ermittelte, also senkrecht zur Einschnittmittelfläche $M_F$ (Fig. 3) gemessene Breite $b_E$ (Fig. 2, Fig. 3) von 0,4 mm bis 2,0 mm, insbesondere von bis zu 1,6 mm, bevorzugt von bis zu 1,2 mm, eine entlang der Einschnittbasislinie $B_L$ ermittelte Länge $c_E$ (Fig. 2) und in radialer Richtung eine maximale Tiefe $t_E$ (Tiefe an der tiefsten Stelle, Fig. 3) von 70% bis 100% der Profiltiefe $T_P$ (Fig. 3) auf, wobei die maximale Tiefe $t_E$ insbesondere höchstens der um 0,5 mm verringerten Profiltiefe $T_P$ beträgt und wobei - wie Fig. 2 bis Fig. 4 in Kombination miteinander zeigen - der Einschnitt 4 beim Ausführungsbeispiel über die gesamte Länge $c_E$ (Fig. 2) auf die maximale Tiefe $t_E$ (Fig. 3) ausgeführt ist. Der Hauptabschnitt 7 (Fig. 2, Fig. 4) verläuft, in Draufsicht betrachtet, über zumindest 50%, bevorzugt über zumindest 60%, der Länge $c_E$ (Fig. 2) des Einschnitts 4.

Wie Fig. 3 und Fig. 4 insbesondere in Kombination zeigen, setzt sich der Einschnitt 4 im Bereich zwischen den Einschnittkanten 5 und dem Einschnittgrund 8 in radialer Richtung aus einem radial äußeren Abschnitt 10, einem in radialer Richtung über seine gesamte Erstreckung in Wellenform verlaufenden, gewellten Abschnitt 11 und einem radial inneren Abschnitt 12 zusammen. Die Abschnitte 10, 11, 12 sind daher sowohl in den Randabschnitten 6 als auch im Hauptabschnitt 7 vorhanden (Fig. 4). Die in radialer Richtung vorliegende Wellenform des gewellten Abschnitts 11, auf welche noch genauer eingegangen wird, ist im Hauptabschnitt 7 von dessen in Draufsicht vorliegender Wellenform überlagert (Fig. 4).

Die nachfolgenden Erläuterungen zu den Abschnitten 10, 11, 12 beziehen sich auf den in Draufsicht senkrecht zur Einschnittmittellinie $M_L$ (Fig. 2) verlaufenden Querschnitt (vergl. Lage der Schnittlinie III-III in Fig. 2).

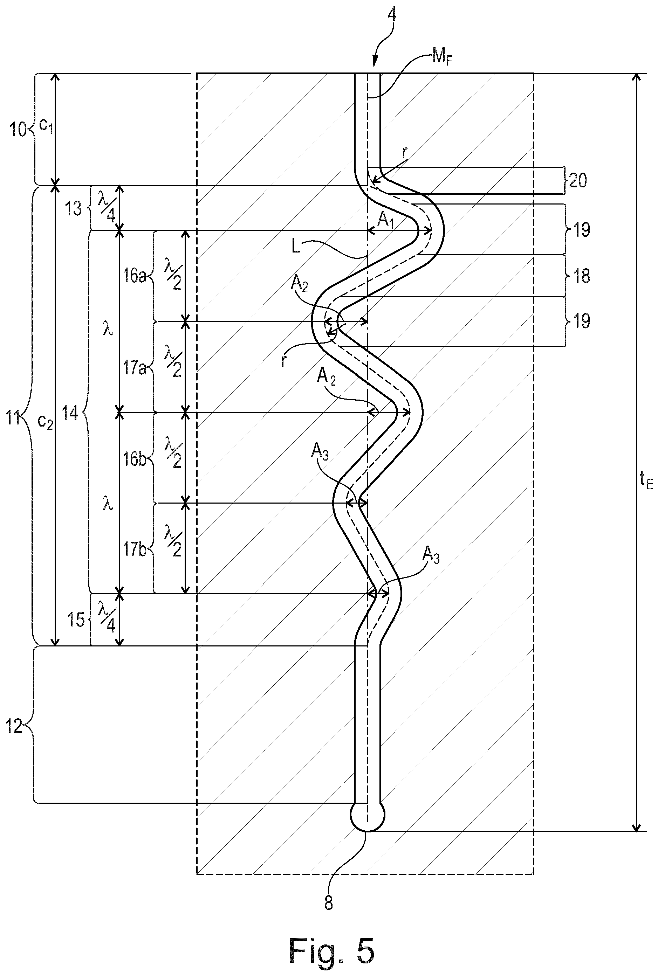

Gemäß Fig. 5 verlaufen der radial äußere Abschnitt 10 und der radial innere Abschnitt 12 jeweils gerade sowie in radialer Richtung, wobei der radial äußere Abschnitt 10 fluchtend mit dem radial inneren Abschnitt 12 verläuft. Die Abschnitte 10, 12 verlaufen also in geradliniger Verlängerung zueinander. Der radial äußere Abschnitt 10 weist in radialer Richtung eine auf die Einschnittmittelfläche $M_F$ bezogene Länge $c_1$ von 10% bis 20%, insbesondere von bis zu 17%, der maximalen Tiefe $t_E$ auf.

In Fig. 5 ist eine die Einschnittmittelfläche $M_F$ zwischen dem radial äußeren Abschnitt 10 und dem radial inneren Abschnitt 12 verbindende, gerade verlaufende, in Ausbreitungsrichtung der Welle des gewellten Abschnitts 11 ausgerichtete Bezugslinie L eingezeichnet.

Der gewellte Abschnitt 11 weist in radialer Richtung eine auf die Einschnittmittelfläche $M_F$ bezogene Länge $c_2$ von 50% bis 70%, insbesondere von 55% bis 65%, der maximalen Tiefe $t_E$, eine Wellenlänge $\lambda$ und eine stufenweise in Richtung Einschnittgrund 8 abnehmende Amplitude auf. Die Wellenlänge $\lambda$ bezieht sich auf die Einschnittmittelfläche $M_F$. Die Amplitude bzw. deren Amplitudenwerte $A_1$, $A_2$, $A_3$, welche - wie noch genauer erläutert wird - die Amplitude spezifizieren, bezieht bzw. beziehen sich auf die Einschnittmittelfläche $M_F$ und die Bezugslinie L.

Der gewellte Abschnitt 11 verläuft über 2,5 Wellenlängen $\lambda$ und setzt sich von radial außen nach radial innen aus einem über 0,25 Wellenlänge $\lambda$ (in Fig. 5: $\lambda/4$) reichenden, radial äußeren Übergangsteil 13, einem über 2,0 Wellenlängen $\lambda$ reichenden, mittleren Teil 14 und einem über 0,25 Wellenlänge $\lambda$ (in Fig. 5: $\lambda/4$) reichenden, radial inneren Übergangsteil 15 zusammen.

Die beiden Enden des mittleren Teils 14 sind gegenüber der Bezugslinie L jeweils ausgelenkt und die Wellenform des gewellten Abschnitts 11 ist durch die beiden Übergangsteile 13, 15 zur Bezugslinie L zurückgeführt.

Der mittlere Teil 14 setzt sich aus vier, jeweils über eine halbe Wellenlänge $\lambda/2$ reichenden, die Bezugslinie L genau einmal passierenden, zwischen zwei maximal ausgelenkten Stellen verlaufenden Segmenten, nämlich - betrachtet von radial außen nach radial innen - einem radial äußeren, ersten Segment 16a, einem radial äußeren, zweiten Segment 17a, einem radial inneren, ersten Segment 16b und einem radial inneren, zweiten Segment 17b - zusammen, wobei die ersten Segmente 16a, 16b bezüglich der radialen Richtung gegensinnig zu den zweiten Segmenten 17a, 17b geneigt sind. Die "maximal ausgelenkten Stellen" sind dabei in bekannter Weise jene, an welchen die Amplitude und damit die Amplitudenwerte $A_1$, $A_2$, $A_3$ ermittelt ist bzw. sind.

Die Amplitude der Welle weist am radial äußeren Ende des radial äußeren, ersten Segments 16a den Amplitudenwert $A_1$ und am radial inneren Ende des radial äußeren, ersten Segments 16a den Amplitudenwert $A_2$ auf, welcher kleiner ist als der Amplitudenwert $A_1$. Ferner weist die Amplitude der Welle am radial äußeren Ende des radial inneren, ersten Segments 16b den Amplitudenwert $A_2$ und am radial inneren Ende des radial inneren, ersten Segmenten 16b den Amplitudenwert $A_3$ auf, welcher kleiner ist als der Amplitudenwert $A_2$. Es gilt dabei $A_1 > A_2 > A_3$, sodass bei jedem ersten Segment 16a, 16b der Amplitudenwert am radial äußeren Ende (Amplitudenwert $A_1$ bzw. $A_2$) größer ist als der Amplitudenwert am radial inneren Ende (Amplitudenwert $A_2$ bzw. $A_3$).

Außerdem weist die Amplitude der Welle am radial äußeren Ende und am radial inneren Ende der zweiten Segmente 17a, 17b jeweils übereinstimmende Amplitudenwerte, nämlich an den Enden des radial äußeren, zweiten Segments 17a jeweils den Amplitudenwert $A_2$ und an den Enden des radial inneren, zweiten Segments 17b jeweils den Amplitudenwert $A_3$ auf. Bei den zweiten Segmenten 17a, 17b nehmen daher die übereinstimmenden Amplitudenwerte $A_2$ bzw. $A_3$ in Richtung Einschnittgrund 8 stufenweise vom radial äußeren, zweiten Segment 17a (Amplitudenwerte $A_2$) zum radial inneren, zweiten Segment 17b (Amplitudenwerte $A_3$) ab.

Der Amplitudenwert $A_3$ beträgt 80% bis 120%, insbesondere 90% bis 100%, der Breite $b_E$ des Einschnitts 4. Der Amplitudenwert $A_2$ beträgt 150% bis 250%, insbesondere 170% bis 230%, besonders bevorzugt 190% bis 210%, des Amplitudenwerts $A_3$. Der Amplitudenwert $A_1$ entspricht dem um die Differenz zwischen den Amplitudenwerten $A_2$, $A_3$ vergrößerten Amplitudenwert $A_2$. Es gilt daher $A_1 = A_2 + (A_2 - A_3)$.

Jedes Segment 16a, 16b, 17a, 17b weist einen die Bezugslinie L passierenden, gerade verlaufenden, mittleren Segmentteil 18 auf. Die mittleren Segmentteile 18 sind durch kreisbogenförmig verlaufende Segmentübergange 19 verbunden, welche jeweils aus Teilen der beiden jeweils aneinander anschließenden Segmente 16a, 17a, 16b, 17b gebildet sind und an die mittleren Segmentteile 18 - bezogen auf die Einschnittmittelfläche $M_F$ - tangential (knickfrei) anschließen. Ein weiterer Segmentübergang 19 verläuft ausgehend vom mittleren Segmentteil 18 des radial äußeren, ersten Segments 16a in den radial äußeren Übergangsteil 13 hinein.

Ferner ist am gegenseitigen Anschlussbereich des radial äußeren Übergangsteils 13 zum radial äußeren Abschnitt 10 ein Übergangsbogen 20 ausgebildet, welcher - bezogen auf die Einschnittmittelfläche $M_F$ - ein gegenseitiges tangentiales Anschließen des radial äußeren Übergangsteils 13 und des radial äußeren Abschnitts 10 sicherstellt und bei der beschriebenen Unterteilung des Einschnitts 4 in die Abschnitte 10, 11, 12 unberücksichtigt bleibt.

"Tangential anschließen" bedeutet, dass eine durch den auf die Einschnittmittelfläche $M_F$ bezogenen, jeweiligen gegenseitigen Anschluss verlaufende, an den einen Teil (mittlerer Segmentteil 18, Segmentübergang 19, Übergangsbogen 20, radial äußerer Abschnitt 10) angelegte Tangente und eine durch den selben gegenseitigen Anschluss verlaufende, an den jeweils anderen Teil angelegte Tangente relativ zur radialen Richtung übereinstimmende Steigungen aufweisen, diese Tangenten daher zusammenfallen. Die Tangenten werden also an den jeweiligen Abschnitt der Einschnittmittelfläche $M_F$ angelegt.

Die Segmentübergange 19 und der Übergangsbogen 20 verlaufen jeweils entlang von übereinstimmend großen Radien r.

Die Erfindung ist auf das beschriebene Ausführungsbeispiel nicht beschränkt.

Der radial äußere Übergangsteil 13 und der radial innere Übergangsteil 15 des gewellten Abschnitts 11 sind optional, sodass sich der gewellte Abschnitt 11 aus den Segmenten 16a, 16b, 17a, 17b zusammensetzen kann. Der gewellte Abschnitt 11 ist zumindest aus zwei ersten und zwei zweiten Segmenten zusammengesetzt. Der Einschnitt 4 weist den gewellten Abschnitt 11 zumindest in einem in Draufsicht vorliegenden Einschnittteil auf, welcher insbesondere über zumindest 50%, bevorzugt über zumindest 75%, der Länge $c_E$ des Einschnitts 4 verläuft.

Die kanalförmige Ausführung des Einschnittgrunds 8 ist optional. Der Einschnittgrund 8 kann, im Querschnitt betrachtet, beispielsweise auch gerade und parallel zur Laufstreifenperipherie verlaufen.

Die Einschnitte 4 können, in Draufsicht betrachtet, bezogen auf die Einschnittbasislinie $B_L$ gebogen (bogenförmig, kreisbogenartig) oder gerade verlaufen. Ferner können die Einschnitte 4, in Draufsicht betrachtet, bezogen auf die Einschnittmittellinie $M_L$ gerade oder durchgehend wellenförmig verlaufen. Bei bezogen auf die Einschnittmittellinie $M_L$ gerade verlaufenden Einschnitten 4 entfällt die Einschnittbasislinie $B_L$ und bei bezogen auf die Einschnittmittellinie $M_L$ durchgehend wellenförmig verlaufenden Einschnitten 4 ist die Einschnittbasislinie $B_L$ entlang der Ausbreitungsrichtung der Welle ausgerichtet und entspricht daher der Wellenmittellinie.

Die Einschnitte 4 können in beliebigen Profilpositiven, daher in Profilblöcken oder in in Umfangsrichtung umlaufenden Profilrippen ausgebildet sein, wobei die Einschnitte 4 ein- oder beidseitig innerhalb der Profilpositive enden können, sodass diese die Profilpositive nicht durchqueren. Bevorzugt durchqueren die Einschnitte 4 die Profilpositive, wobei bei schulterseitigen Profilpositiven unter durchquerenden Einschnitten 4 solche Einschnitte 4 verstanden werden, welche die Profilpositive zumindest innerhalb der Bodenaufstandsfläche durchqueren. Die Bodenaufstandsfläche entspricht dem statisch ermittelten Footprint (ermittelt mit einem auf einer Normfelge montierten Reifen, Last bei 70% der maximalen Tragfähigkeit, Innendruck 85% des Normdruckes, gemäß ETRTO-Standards). Die Einschnitte 4 verlaufen, in Draufsicht betrachtet, zur axialen Richtung unter einem Winkel von 0° bis 50°, insbesondere von 5° bis 45°, besonders bevorzugt von 20% bis 40%, wobei sich der Winkel bei Einschnitten 4 mit gerade verlaufender Einschnittmittellinie $M_L$ (Einschnittbasislinie $B_L$ entfällt) auf die Einschnittmittellinie $M_L$, bei Einschnitten 4 mit gerade verlaufender Einschnittbasislinie $B_L$

(Einschnittmittellinie $M_L$ verläuft zumindest abschnittsweise wellenförmig) auf die Einschnittbasislinie $B_L$, bei Einschnitten 4 mit gebogen (bogenförmig, kreisbogenartig) verlaufender Einschnittmittellinie $M_L$ (Einschnittbasislinie $B_L$ entfällt) auf eine die Enden der Einschnittmittellinie $M_L$ verbindende gerade Linie und bei Einschnitten 4 mit gebogen verlaufender Einschnittbasislinie $B_L$ (Einschnittmittellinie $M_L$ verläuft zumindest abschnittsweise wellenförmig) auf eine die Enden der Einschnittbasislinie $B_L$ verbindende gerade Linie bezieht. Ferner verlaufen die Einschnitte 4 vorzugsweise zumindest in Gruppen und insbesondere zumindest innerhalb des jeweiligen Profilpositivs parallel zueinander.

Bezugszeichenliste

| | |
|---|---|
| 1 | mittlerer Profilblock |
| 2 | Querrille |
| 3 | Umfangsrille |
| 4 | Einschnitt |
| 5 | Einschnittkante |
| 6 | Randabschnitt |
| 7 | Hauptabschnitt |
| 8 | Einschnittgrund |
| 9 | Einschnittwand |
| 10 | radial äußerer Abschnitt |
| 11 | gewellter Abschnitt |
| 12 | radial innerer Abschnitt |
| 13 | radial äußerer Übergangsteil |
| 14 | mittlerer Teil |
| 15 | radial innerer Übergangsteil |
| 16a | radial äußeres, erstes Segment |
| 16b | radial inneres, erstes Segment |
| 17a | radial äußeres, zweites Segment |
| 17b | radial inneres, zweites Segment |
| 18 | mittlerer Segmentteil |
| 19 | Segmentübergang |

| | |
|---|---|
| 20 | Übergangsbogen |
| $A_1$, $A_2$, $A_3$ | Amplitudenwert |
| $b_E$ | Breite |
| $B_L$ | Einschnittbasislinie |
| $c_1$, $c_2$, $c_E$ | Länge |
| L | Bezugslinie |
| $M_F$ | Einschnittmittelfläche |
| $M_L$ | Einschnittmittellinie |
| r | Radius |
| $t_E$ | maximale Tiefe |
| $T_P$ | Profiltiefe |
| U | Doppelpfeil (Umfangsrichtung) |
| $\lambda$ | Wellenlänge |

**Patentansprüche**

1.  Fahrzeugluftreifen mit einem Laufstreifen mit von Rillen (2, 3) begrenzten Profilpositiven (1) mit in Draufsicht zur axialen Richtung unter einem Winkel von 0° bis zu 50° verlaufenden Einschnitten (4) mit jeweils einem Einschnittgrund (8) und einer Breite ($b_E$) von 0,4 mm bis 2,0 mm, wobei jeder Einschnitt (4) zumindest in einem in Draufsicht vorliegenden Einschnittteil auf eine maximale Tiefe ($t_E$) von 70% bis 100% der Profiltiefe ($T_{UR}$) reicht und in diesem Einschnittteil, im Querschnitt betrachtet, einen in radialer Richtung wellenförmig verlaufenden, gewellten Abschnitt (11) mit einer in Richtung Einschnittgrund (8) abnehmenden Amplitude, welche relativ zu einer in Ausbreitungsrichtung der Welle ausgerichteten Bezugslinie (L) ermittelt ist, aufweist, wobei der gewellte Abschnitt (11) oder ein Teil (14) des gewellten Abschnitts (11) aus die Bezugslinie (L) genau einmal passierenden, zwischen den maximal ausgelenkten Stellen des gewellten Abschnitts (11) verlaufenden Segmenten (16a, 16b, 17a, 17b) zusammengesetzt ist, wobei jedes Segment (16a, 16b, 17a, 17b) ein bezüglich der radialen Richtung geneigtes, erstes Segment (16a, 16b) oder ein bezüglich der radialen Richtung gegensinnig zum ersten Segment (16a, 16b) geneigtes, zweites Segment (17a, 17b) ist und wobei bei jedem ersten Segment (16a, 16b) der Amplitudenwert ($A_1$, $A_2$) am radial äußeren Ende größer ist als der Amplitudenwert ($A_2$, $A_3$) am radial inneren Ende, wobei der gewellte Abschnitt (11) bzw. der Teil (14) des gewellten Abschnitts (11) aus zumindest, vorzugsweise genau, zwei ersten und zwei zweiten Segmenten (16a, 16b, 17a, 17b) zusammengesetzt ist, **dadurch gekennzeichnet, dass** bei jedem zweiten Segment (17a, 17b) der Amplitudenwert ($A_2$, $A_3$) am radial äußeren Ende mit dem Amplitudenwert ($A_2$, $A_3$) am radial inneren Ende übereinstimmt und wobei die übereinstimmenden Amplitudenwerte ($A_2$, $A_3$) stufenweise in Richtung Einschnittgrund (8) von einem zweiten Segment (17a) zum nächsten zweiten Segment (17b) abnehmen.

2.  Fahrzeugluftreifen nach Anspruch 1, **dadurch gekennzeichnet, dass** ein erstes Segment (16a) das radial äußerste Segment (16a) und ein zweites Segment (17b) das radial innerste Segment (17b) ist.

3.  Fahrzeugluftreifen nach Anspruch 1 oder 2, **dadurch gekennzeichnet, dass** der gewellte Abschnitt (11) bzw. der Teil (14) des gewellten Abschnitts (11) genau zwei erste und zwei zweite Segmente (16a, 16b, 17a, 17b) aufweist, sodass der größte Amplitudenwert ($A_1$) am radial äußeren Ende des radial äußersten, ersten Segments (16a) vorliegt, wobei Folgendes gilt:

$$A_1 = A_2 + (A_2 - A_3),$$

wobei

A$_1$ der größte Amplitudenwert,
A$_2$ der mittlere Amplitudenwert und
A$_3$ der kleinste Amplitudenwert

ist.

4.  Fahrzeugluftreifen nach einem der Ansprüche 1 bis 3, **dadurch gekennzeichnet**, der bzw. die kleinste(n) Amplitudenwert(e) ($A_3$) 80% bis 120%, insbesondere 90% bis 100%, der Breite ($b_E$) des Einschnitts (4) beträgt bzw. betragen.

5.  Fahrzeugluftreifen nach Anspruch 4, **dadurch gekennzeichnet, dass** die zweitkleinsten Amplitudenwerte ($A_2$) 150% bis 250%, insbesondere 170% bis 230%, bevorzugt 190% bis 210%, des kleinsten Amplitudenwerts ($A_1$) bzw. der kleinsten Amplitudenwerte ($A_1$) beträgt bzw. betragen.

6.  Fahrzeugluftreifen nach einem der Ansprüche 1 bis 5, **dadurch gekennzeichnet, dass** der gewellte Abschnitt (11) in radialer Richtung eine Länge ($c_2$) von 50% bis 70%, insbesondere von 55% bis 65%, der maximalen Tiefe ($t_E$) des Einschnitts (4) aufweist.

**7.** Fahrzeugluftreifen nach einem der Ansprüche 1 bis 6, **dadurch gekennzeichnet, dass** jedes Segment (16a, 16b, 17a, 17b), im Querschnitt betrachtet, einen die Bezugslinie (L) passierenden, gerade verlaufenden, mittleren Segmentteil (18) aufweist, wobei die mittleren Segmentteile (18) durch kreisbogenförmig verlaufende, an die mittleren Segmentteile (18) tangential anschließende Segmentübergänge (19) verbunden sind.

**8.** Fahrzeugluftreifen nach Anspruch 7, **dadurch gekennzeichnet, dass** die Segmentübergänge (19) entlang von übereinstimmend großen Radien (r) verlaufen.

**9.** Fahrzeugluftreifen nach einem der Ansprüche 1 bis 8, **dadurch gekennzeichnet, dass** an das radial äußere Ende des gewellten Abschnitts (11) ein zur Laufstreifenperipherie reichender, in radialer Richtung verlaufender, radial äußerer Abschnitt (10) mit einer in radialer Richtung ermittelten Länge ($c_1$) von 10% bis 20%, insbesondere von bis zu 17%, der maximalen Tiefe ($t_E$) des Einschnitts (5) anschließt.

**10.** Fahrzeugluftreifen nach einem der Ansprüche 1 bis 9, **dadurch gekennzeichnet, dass** an das radial innere Ende des gewellten Abschnitts (11) ein in radialer Richtung verlaufender, radial innerer Abschnitt (12) anschließt, welcher insbesondere fluchtend mit dem gegebenenfalls vorgesehenen, radial äußeren Abschnitt (10) verläuft.

**11.** Fahrzeugluftreifen nach einem der Ansprüche 1 bis 10, **dadurch gekennzeichnet, dass** der Einschnittteil, in welchem der Einschnitt (4) den gewellten Abschnitt (11) aufweist, in Draufsicht betrachtet, über zumindest 50%, insbesondere über zumindest 75%, der Länge ($c_E$) des Einschnitts (4) verläuft.

**12.** Fahrzeugluftreifen nach einem der Ansprüche 1 bis 11, **dadurch gekennzeichnet, dass** der Einschnitt (4) über seine gesamte Erstreckung auf die maximale Tiefe ($t_E$) reicht und über seine gesamte in Draufsicht vorliegende Erstreckung den gewellten Abschnitt (11) aufweist.

**13.** Fahrzeugluftreifen nach einem der Ansprüche 1 bis 12, **dadurch gekennzeichnet, dass** sich der Einschnitt (4), in Draufsicht betrachtet, aus einem in Wellenform verlaufenden Hauptabschnitt (7) und zwei gerade oder gebogen sowie fluchtend miteinander verlaufenden Randabschnitten (6) zusammensetzt.

**14.** Fahrzeugluftreifen nach einem der Ansprüche 1 bis 13, **dadurch gekennzeichnet, dass** die Einschnitte (4) die Profilpositive (1) durchqueren.

**15.** Fahrzeugluftreifen nach einem der Ansprüche 1 bis 14, **dadurch gekennzeichnet, dass** der Teil (14) des gewellten Abschnitts (11) aus den Segmenten (16a, 16b, 17a, 17b) zusammengesetzt ist, wobei die beiden Enden des Teils (14) gegenüber der Bezugslinie (L) ausgelenkt sind und wobei die Welle des gewellten Abschnitts (11) durch einen an das radial äußere Ende des Teils (14) des gewellten Abschnitts (11) abschließenden Übergangsteil (10) und einen an das radial innere Ende des Teils (14) des gewellten Abschnitts (11) abschließenden Übergangsteil (12) zur Bezugslinie (L) zurückgeführt ist.

## Claims

**1.** Pneumatic vehicle tyre comprising a tread with profile positives (1), which are delimited by grooves (2, 3) and have sipes (4), which in plan view run at an angle to the axial direction of 0° to 50° and each have a sipe base (8) and a width ($b_E$) of 0.4 mm to 2.0 mm, wherein, at least in a sipe part as seen in plan view, each sipe (4) reaches to a maximum depth ($t_E$) of 70% to 100% of the profile depth ($T_{UR}$) and has in this sipe part, when seen in cross section, an undulating portion (11) that runs in a wave form in the radial direction and has an amplitude decreasing in the direction of the sipe base (8), determined relative to a reference line (L) aligned in the direction of propagation of the wave, wherein the undulating portion (11) or a part (14) of the undulating portion (11) is made up of segments (16a, 16b, 17a, 17b) running between the points of maximum deflection of the undulating portion (11) and passing through the reference line (L) exactly once, wherein each segment (16a, 16b, 17a, 17b) is a first segment (16a, 16b), inclined with respect to the radial direction, or a second segment (17a, 17b), inclined oppositely to the first segment (16a, 16b) with respect to the radial direction, and wherein, for each first segment (16a, 16b), the amplitude value ($A_1$, $A_2$) at the radially outer end is greater than the amplitude value ($A_2$, $A_3$) at the radially inner end, wherein the undulating portion (11) or the part (14) of the undulating portion (11) is made up of at least, preferably exactly, two first and two second segments (16a, 16b, 17a, 17b), **characterized in that**, for every second segment (17a, 17b), the amplitude value ($A_2$, $A_3$) at the radially outer end coincides with the amplitude value ($A_2$, $A_3$) at the radially inner end and wherein the coinciding amplitude values ($A_2$, $A_3$) decrease step by step from one second segment (17a) to the next second segment (17b) in the direction of the sipe base (8).

**2.** Pneumatic vehicle tyre according to Claim 1, **characterized in that** a first segment (16a) is the radially outermost segment (16a) and a second segment (17b) is the radially innermost segment (17b).

3. Pneumatic vehicle tyre according to Claim 1 or 2, **characterized in that** the undulating portion (11) or the part (14) of the undulating portion (11) has exactly two first and two second segments (16a, 16b, 17a, 17b), so that the greatest amplitude value ($A_1$) is at the radially outer end of the radially outermost, first segment (16a), wherein the following applies:

$$A_1 = A_2 + (A_2 - A_3),$$

where

   $A_1$ is the greatest amplitude value,
   $A_2$ is the mid amplitude value and
   $A_3$ is the smallest amplitude value

4. Pneumatic vehicle tyre according to one of Claims 1 to 3, **characterized in that** the smallest amplitude value(s) ($A_3$) is or are 80% to 120%, in particular 90% to 100%, of the width ($b_E$) of the sipe (4).

5. Pneumatic vehicle tyre according to Claim 4, **characterized in that** the second-smallest amplitude values ($A_2$) is or are 150% to 250%, in particular 170% to 230%, preferably 190% to 210%, of the smallest amplitude value ($A_1$) or the smallest amplitude values ($A_1$).

6. Pneumatic vehicle tyre according to one of Claims 1 to 5, **characterized in that** the undulating portion (11) has in the radial direction a length ($c_2$) of 50% to 70%, in particular of 55% to 65%, of the maximum depth ($t_E$) of the sipe (4).

7. Pneumatic vehicle tyre according to one of Claims 1 to 6, **characterized in that**, when seen in cross section, each segment (16a, 16b, 17a, 17b) has a straight-running, middle segment part (18) passing through the reference line (L), wherein the middle segment parts (18) are connected by arcuately running segment transitions (19) tangentially adjoining the middle segment parts (18).

8. Pneumatic vehicle tyre according to Claim 7, **characterized in that** the segment transitions (19) run along radii (r) of the same magnitude.

9. Pneumatic vehicle tyre according to one of Claims 1 to 8, **characterized in that** the radially outer end of the undulating portion (11) is adjoined by a radially outer portion (10), which runs in the radial direction, reaches the periphery of the tread and has a length ($c_1$), determined in the radial direction, of 10% to 20%, in particular of up to 17%, of the maximum depth ($t_E$) of the sipe (5).

10. Pneumatic vehicle tyre according to one of Claims 1 to 9, **characterized in that** the radially inner end of the undulating portion (11) is adjoined by a radially inner portion (12), which runs in the radial direction and in particular runs in line with the possibly provided radially outer portion (10).

11. Pneumatic vehicle tyre according to one of Claims 1 to 10, **characterized in that**, when seen in plan view, the sipe part in which the sipe (4) has the undulating portion (11) runs over at least 50%, in particular over at least 75%, of the length ($c_E$) of the sipe (4).

12. Pneumatic vehicle tyre according to one of Claims 1 to 11, **characterized in that** the sipe (4) reaches over its entire extent to the maximum depth ($t_E$) and has the undulating portion (11) over its entire extent in plan view.

13. Pneumatic vehicle tyre according to one of Claims 1 to 12, **characterized in that**, when seen in plan view, the sipe (4) is made up of a main portion (7), running in the form of a wave, and two edge portions (6), running straight or bent and in line with one another.

14. Pneumatic vehicle tyre according to one of Claims 1 to 13, **characterized in that** the sipes (4) extend across the profile positives (1).

15. Pneumatic vehicle tyre according to one of Claims 1 to 14, **characterized in that** the part (14) of the undulating portion (11) is made up of the segments (16a, 16b, 17a, 17b), wherein the two ends of the part (14) are deflected with respect to the reference line (L) and wherein the wave of the undulating portion (11) is taken back to the reference line (L) by a transitional part (10), ending the radially outer end of the part (14) of the undulating portion (11), and a transitional part (12), ending the radially inner end of the part (14) of the undulating portion (11).

**Revendications**

1. Pneumatique de véhicule avec une bande de roulement avec des éléments positifs de profil (1) délimités par des rainures (2, 3), avec des entailles (4) s'étendant, en vue de dessus, selon un angle de 0° à 50° par rapport à la direction axiale, avec respectivement un fond d'entaille (8) et une largeur ($b_E$) de 0,4 mm à 2,0 mm, chaque entaille (4) atteignant, au moins dans une partie d'entaille présente en vue de dessus, une profondeur maximale ($t_E$) de 70 % à 100 % de la profondeur de profil ($T_{UR}$) et présentant, dans cette partie d'entaille, considérée en coupe transversale, une section ondulée (11) s'étendant sous forme ondulée dans la direction radiale, avec une amplitude décroissant en direction du fond d'entaille (8), qui est déterminée par rapport à une ligne de référence (L) orientée dans la direction de propagation de l'onde, la section ondulée (11) ou une partie (14) de la section ondulée (11) étant composée de segments (16a, 16b, 17a, 17b) passant exactement une fois par la ligne de référence (L), s'étendant entre les points de déviation maximale de la section ondulée (11), chaque segment (16a, 16b, 17a, 17b) étant un premier segment (16a, 16b) incliné par rapport à la direction radiale ou un deuxième segment (17a, 17b) incliné par rapport à la direction radiale en sens opposé par rapport au premier segment (16a, 16b), et, pour chaque premier segment (16a, 16b), la valeur d'amplitude ($A_1$, $A_2$) à l'extrémité radialement extérieure étant supérieure à la valeur d'amplitude ($A_2$, $A_3$) à l'extrémité radialement intérieure, la section ondulée (11) ou la partie (14) de la section ondulée (11) étant composée d'au moins, de préférence d'exactement, deux premiers et deux deuxièmes segments (16a, 16b, 17a, 17b),
**caractérisé en ce que**, pour chaque deuxième segment (17a, 17b), la valeur d'amplitude ($A_2$, $A_3$) à l'extrémité radialement extérieure coïncide avec la valeur d'amplitude ($A_2$, $A_3$) à l'extrémité radiale intérieure, et les valeurs d'amplitude coïncidentes ($A_2$, $A_3$) diminuent progressivement en direction du fond d'entaille (8) d'un deuxième segment (17a) au deuxième segment suivant (17b).

2. Pneumatique de véhicule selon la revendication 1, **caractérisé en ce qu'**un premier segment (16a) est le segment radialement le plus extérieur (16a) et un deuxième segment (17b) est le segment radialement le plus intérieur (17b).

3. Pneumatique de véhicule selon la revendication 1 ou 2, **caractérisé en ce que** la section ondulée (11) ou la partie (14) de la section ondulée (11) présente exactement deux premiers et deux deuxièmes segments (16a, 16b, 17a, 17b), de telle sorte que la plus grande valeur d'amplitude ($A_1$) se trouve à l'extrémité radialement extérieure du premier segment (16a) radialement le plus extérieur, où :

$$A_1 = A_2 + (A_2 - A_3),$$

où

A$_1$ est la plus grande valeur d'amplitude,
A$_2$ est la valeur d'amplitude moyenne,
A$_3$ est la plus petite valeur d'amplitude

4. Pneumatique de véhicule selon l'une quelconque des revendications 1 à 3, **caractérisé en ce que** la ou les plus petites valeurs d'amplitude ($A_3$) représentent 80 % à 120 %, notamment 90 % à 100 %, de la largeur ($b_E$) de l'entaille (4).

5. Pneumatique de véhicule selon la revendication 4, **caractérisé en ce que** les deuxièmes plus petites valeurs d'amplitude ($A_2$) représentent 150 % à 250 %, notamment 170 % à 230 %, de préférence 190 % à 210 %, de la plus petite valeur d'amplitude ($A_1$) ou des plus petites valeurs d'amplitude ($A_1$).

6. Pneumatique de véhicule selon l'une quelconque des revendications 1 à 5, **caractérisé en ce que** la première section ondulée (11) présente, dans la direction radiale, une longueur ($c_2$) de 50 % à 70 %, notamment de 55 % à 65 %, de la profondeur maximale ($t_E$) de l'entaille (4).

7. Pneumatique de véhicule selon l'une quelconque des revendications 1 à 6, **caractérisé en ce que** chaque segment (16a, 16b, 17a, 17b) présente, considéré en coupe transversale, une partie de segment centrale (18) s'étendant de manière rectiligne, passant par la ligne de référence (L), les parties de segment centrales (18) étant reliées par des transitions de segment (19) s'étendant en forme d'arc de cercle, se raccordant tangentiellement aux parties de segment centrales (18).

8. Pneumatique de véhicule selon la revendication 7, **caractérisé en ce que** les transitions de segment (19) s'étendent le long de rayons (r) de taille coïncidente.

9. Pneumatique de véhicule selon l'une quelconque des revendications 1 à 8, **caractérisé en ce qu'**à l'extrémité radialement extérieure de la section ondulée (11) se raccorde une section radialement extérieure (10) s'étendant dans la direction radiale, atteignant la périphérie de la bande de roulement, avec une longueur ($c_1$) déterminée dans la direction radiale de 10 % à 20 %, notamment de jusqu'à 17 %, de la profondeur maximale ($t_E$) de l'entaille (5).

10. Pneumatique de véhicule selon l'une quelconque des revendications 1 à 9, **caractérisé en ce qu'**à l'extrémité radialement intérieure de la section ondulée (11) se raccorde une section radialement intérieure (12) s'étendant dans la direction radiale, qui s'étend notamment en alignement avec la section radialement extérieure (10) éventuellement prévue.

11. Pneumatique de véhicule selon l'une quelconque des revendications 1 à 10, **caractérisé en ce que** la partie d'entaille, dans laquelle l'entaille (4) présente la section ondulée (11), s'étend, considérée en vue de dessus, sur au moins 50 %, notamment sur au moins 75 %, de la longueur ($c_\varepsilon$) de l'entaille (4).

**12.** Pneumatique de véhicule selon l'une quelconque des revendications 1 à 11, **caractérisé en ce que** l'entaille (4) atteint la profondeur maximale ($t_E$) sur toute son extension et présente la section ondulée (11) sur toute son extension présente en vue de dessus.

**13.** Pneumatique de véhicule selon l'une quelconque des revendications 1 à 12, **caractérisé en ce que** l'entaille (4), considérée en vue de dessus, se compose d'une section principale (7) s'étendant sous forme ondulée et de deux sections de bord (6) s'étendant de manière rectiligne ou courbe et en alignement l'une avec l'autre.

**14.** Pneumatique de véhicule selon l'une quelconque des revendications 1 à 13, **caractérisé en ce que** les entailles (4) traversent les éléments positifs de profil (1).

**15.** Pneumatique de véhicule selon l'une quelconque des revendications 1 à 14, **caractérisé en ce que** la partie (14) de la section ondulée (11) est composée des segments (16a, 16b, 17a, 17b), les deux extrémités de la partie (14) étant déviées par rapport à la ligne de référence (L) et l'ondulation de la section ondulée (11) étant ramenée à la ligne de référence (L) par une partie de transition (10) se terminant à l'extrémité radialement extérieure de la partie (14) de la section ondulée (11) et une partie de transition (12) se terminant à l'extrémité radialement intérieure de la partie (14) de la section ondulée (11).

Fig. 1

Fig. 2

Fig. 4

Fig. 3:III-III

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019035847 A1
- US 4794965 A
- JP 2000177329 A